# EUROPEAN PATENT APPLICATION

(11) **EP 2 283 985 A1**
(43) Date of publication of application: **16.02.2011**
(21) Application number: 10161156.4
(22) Date of filing: 27.04.2010
(51) Int. Cl.: B27B 31/00, B65G 1/10, B65G 65/00

(54) **Method and device for managing panels for use in operating machinery**

(30) Priority: 29.04.2009 IT PS20090010
(71) Applicant: Macmazza S.r.l., 61100 Pesaro PU (IT)
(72) Inventor: Storoni, Alberto, 61100 Pesaro PU (IT)
(74) Representative: Gustorf, Gerhard

(57) **Abstract**

Method for feeding panels to manufacturing machines, especially to cutting machines, comprising overlapping and stacking a plurality of trays for holding panels and respective vertical movement at a differentiated mutual interspace, in such a manner that the tray laying at the level of the working plane of the served machine has an interspace, with respect to the tray overlying thereto, greater than the interspace comprised between the other trays of the stack, lower and upper with respect to said level, that remain mutually overlaid, to reduce the vertical dimension of the stack and maximise the number of stackable trays, simultaneously having enough working space at the work plane; device for respective implementation, comprising a stack of overlapped trays (3), respectively supported on opposite sides at two points (10) per side (9), said support sides (10) being symmetrically and simultaneously positionable, along each of the sides themselves, through equally spaced fixing of the support means (10) to two pairs of chains (11, 12) symmetrically synchronically circuiting on two opposite sides of the stack, on each of whose sides the respective pair of chains (11, 12) is counterfaced in a coplanar manner on the inward development side of the respective circuits, whose inward development sections symmetrically outline distal slanting planes (15, 16) and intermediate vertical track segment (17), fixed equally spaced along such inward development sections being said sliding support means (10) of said trays (3).

## Description

### DETAILED DESCRIPTION

### Technical background

In the furnishing furniture industry in particular, as well as in other industrial sectors in general, panels are machined, usually formed by surrogates of wood, for various purposes.

When performing the abovementioned machining operations such panels are, obviously, fed to the manufacturing machines.

For example, patent application n° PS2007A000024 filed on 11th July 2007 on behalf of the same applicant having the title "structure for feeding automatic panel cutting machines", describes such structure comprising a truck having a support plane furrowed with transverse through interruptions, for introducing - on two sides - forks of a truck on two sides of the fork of a forklift, to define at least three half-planes, angularly translatable from an opposite longitudinal to an opposite transverse position with respect to the front part of the cutting machine and vice versa, said half-planes being preferably shaped having bevels and portions for complementarily interacting with at least one L-shaped operative peninsula positioned laterally before said front part of the cutting machine, said half-planes also being preferably sliding and mutually stackable in the longitudinal direction of the truck, with the aim of facilitating the feeding of the panels to the cutting machine, as outlined in the respective description text, to which reference shall be made for further details.

Whether assisted by such service platforms or not, the manufacturing machines for machining panels shall obviously be fed with the panels to be machined and this usually implies the continuous use of a forklift, with respective operator, moving to and fro between the warehouse and machine.

Such need for continuous assistance particularly arises in small-scale machining operations, wherein the panel sheets, in the supply dimensions, are used solely partly when contingently needed and thus they must be removed to create room for other sheets, in turn used solely partly and then removed, and so on and so forth.

### Objects of the invention

Thus, the main object of the present invention, within the context outlined above, is that of providing a solution concept capable of allowing obtaining a reservoir that is reasonably large to feed the machines for machining panels in general and for cutting machines in particular, in such a manner to eliminate the need for constant use of the forklift therefor.

Another object of the present invention is that of attaining the previous object and simultaneously providing a solution concept suitable to obtain an actual extensive service system for any type of manufacturing machines for panels, which, alongside facilitating feeding thereof, allows handling the return of the panels, or respective portions, not machined by the machines, i.e. a system operating both feeding and receiving.

Another object of the present invention is that of attaining the previous objects and simultaneously providing a solution concept that also includes introduction into the automatic supply lines, with operating functions both upstream of the line as well as along the respective development.

A further object of the present invention is that of attaining the previous objects through a solution concept capable of allowing the operator a manual feeding action, without particular effort and without requiring any help therefor.

A further object of the present invention is that of attaining the previous objects by means of a simple and efficient solution concept, that operates safely and is inexpensive considering the results practically attained therewith.

### Summary of the solution concept

These and other objects are attainable through the method for handling panels for use in manufacturing machines, especially to cutting machines, according to the present invention, comprising overlapping and stacking a plurality of trays for holding panels and respective vertical movement at a differentiated mutual interspace, in such a manner that the tray laying at the level of the working plane of the served machine has an interspace, with respect to the tray overlying thereto, greater than the interspace comprised between the other trays of the stack, lower and upper with respect to said level, that remain mutually overlaid, to reduce the vertical dimension of the stack and maximise the number of stackable trays, simultaneously having enough working space at the work plane; as well as through the device of the respective implementation according to the present invention itself, comprising a stack of overlapped trays (3), respectively supported on the opposite sides at two points (10) per side (9), said support sides (10) being symmetrically and simultaneously positionable, along each of the sides themselves, by equally spaced fixing of the support means (10) to two pairs of chains (11, 12) synchronically symmetrically circuiting on two opposite sides of the stack, on each of whose sides the respective pair of chains (11, 12) is counterfaced in a coplanar manner on the inward bending development side of the respective circuits, whose sections having an inward bendings symmetrically outline distal slanting planes (15, 16) and intermediate vertical track segment (17), fixed equally spaced along such inward development sections being said sliding support means (10) of said trays (3).

### Identifying the attached drawings

Further characteristics and advantages of the method for handling panels for use in manufacturing machines, according to the present invention, shall be clearer from the following detailed description of a preferred but not exclusive embodiment of a device for respective implementation, represented solely for exemplifying and non-limiting purposes in the attached six drawings, wherein:
Figure 1 shows a perspective view of an embodiment of a device for the implementation of the method according to the present invention;

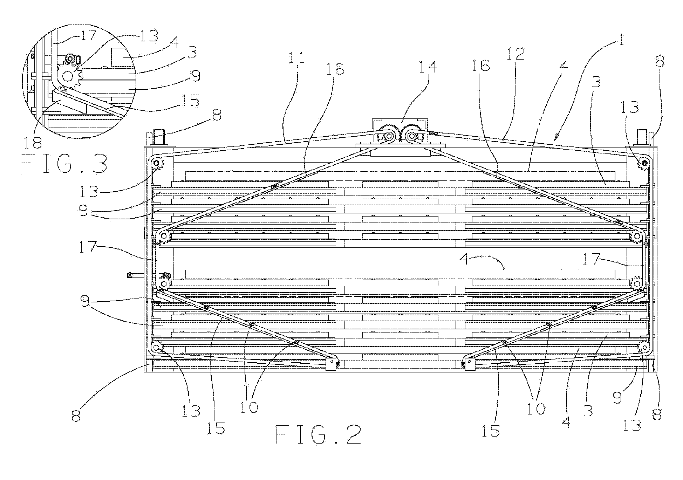

Figure 2 shows a lateral view of the device itself, on the face of a greater side thereof;
Figure 3 shows a detail of figure 2;

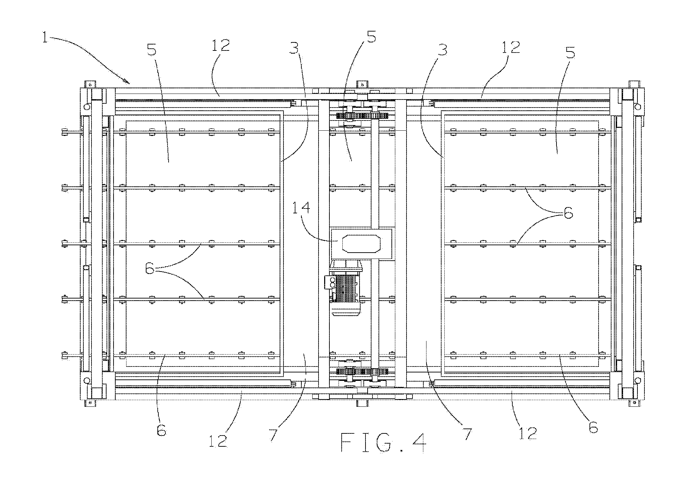

Figure 4 shows an upper plan view of the embodiment of a device for the implementation of the method according to the present invention;

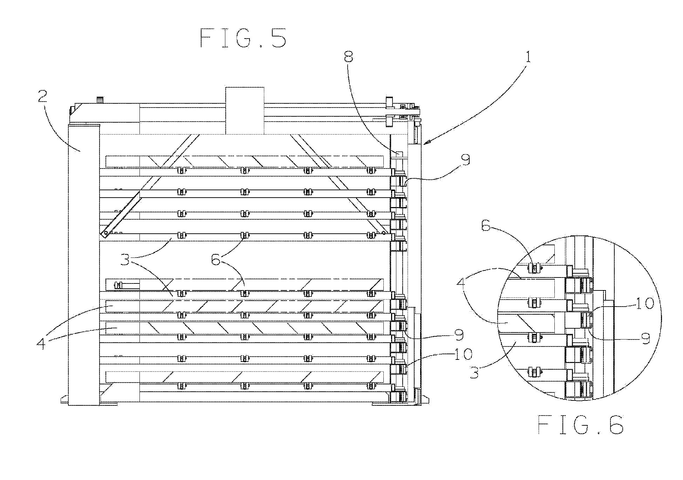

Figure 5 shows a lateral view of the device itself, on the face of a smaller side thereof;
Figure 6 shows a detail of figure 5;

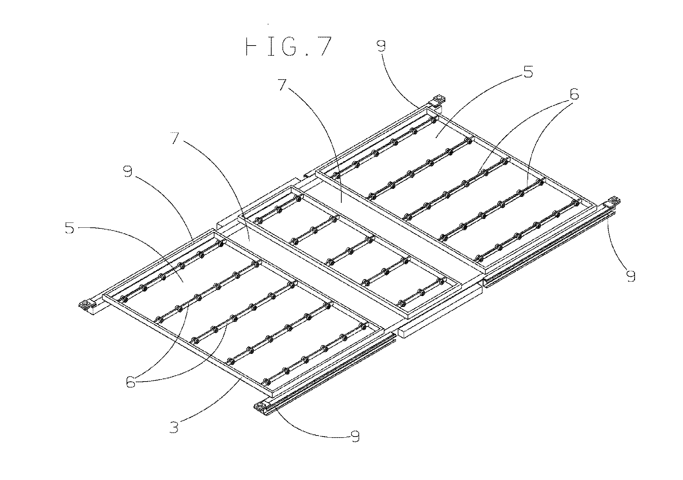

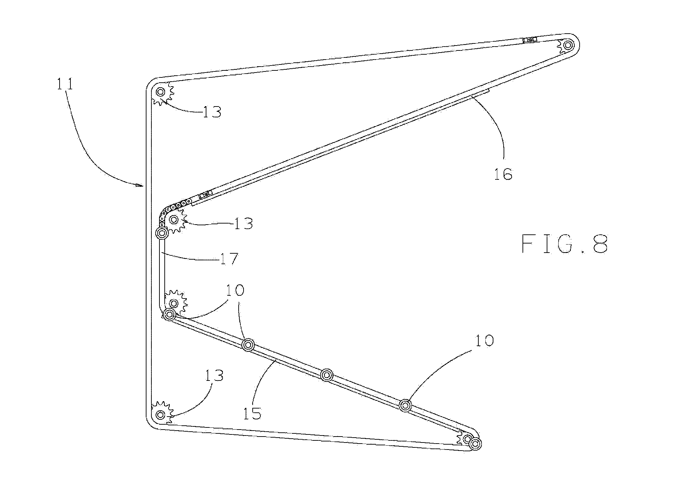

Figures 7 and 8 respectively show two elements forming the device itself.

### Static description of the embodiment

The method for handling panels for use in manufacturing machines, especially cutting machines, according to the present invention comprises overlapping and stacking a plurality of trays for holding panels and respective vertical movement at a differentiated mutual interspace, in such a manner that the tray laying at the level of the working plane of the served machine (i.e. coplanar to the work plane of the served machine) has an interspace, with respect to the tray overlying thereto, greater than the interspace comprised between the other trays of the stack, lower and upper with respect to said level, that remain mutually overlaid, to reduce the vertical dimension of the stack and maximise the number of stackable trays, simultaneously having enough working space at the work plane.

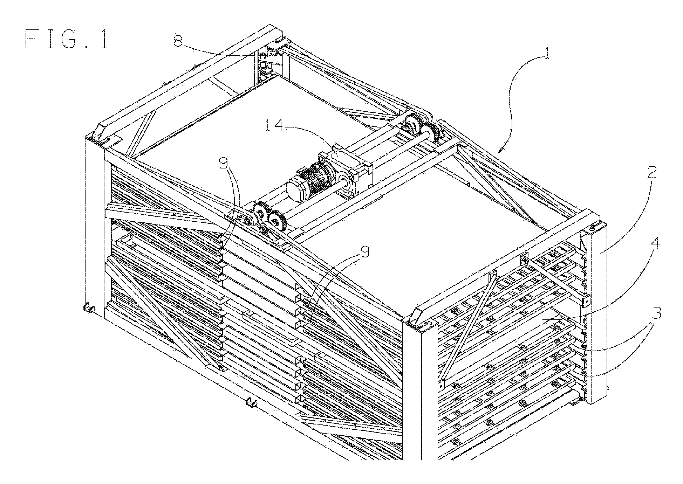

Indicated in its entirety with 1 in figure 1 is a device representing a preferred embodiment of the method according to the present invention, comprising a parallelepiped-shaped metal frame 2, accommodating a stack of overlapped rectangular trays 3 for supporting panels 4.

Each tray 3 is made up of three coplanar portions 5, having a plurality of parallel roller transverse elements 6, separated by two sub-levelled median bands 7, parallel and transversely void, dimensioned and positioned to be suitable to receive the forks of a forklift.

Each tray 3 slides constrained, at the respective four corners, to vertical bars 8 and bears, on the extension of the greater sides, lateral guides 9, approximately interrupted at the sub-levelled median bands 7.

The lateral guides 9 of the trays 3 are made up of C-shaped profiles, with an outwards opening, welded beneath the level of the roller transverse elements 6, in such a manner that the panel 4 supported by a lower tray 3 can be positioned between the lateral guides 9 of the upper tray 3, when the trays 3 arrive to be mutually overlaid, in the functions better described hereinafter.

Sliding in the lateral guides 9 of the trays 3 are dual wheels (counter-rotating) 10, a pair on each side of the overlapped trays 3, whose hub (indicated the same reference number 10) is fixed equally spaced to one of two pairs of chains 11 and 12, symmetrically synchronically circuiting on two opposite sides of the stack of trays 3, driven by pinions 13 and actuated by a gear motor 14 positioned over the frame 2.

At each of the two opposite sides of the stack of trays 3, the respective pair of chains 11 and 12 is counterfaced in a coplanar manner on the inward development side of the respective circuits; such inward development sections of the circuits symmetrically outline lower 15 and upper 16 slanted planes, as well as intermediate vertical track segments 17.

Along the respective slanted track section 15 and 16, the chains 11 and 12 have transverse elements 18 assembled in an oblique manner to counter the forces that bend the straightness of the metal frame 2.

Fixed equally spaced along such inward development sections of the circuits of the chains 15 and 16 are pins of said dual wheels 10, sliding inside said lateral guides 9 of said trays 3, for the functions specified hereinafter.

### Dynamic description of the embodiment

Thus having completed the static description of a preferred embodiment of a device for implementing the method for handling panels for use in manufacturing machines according to the present invention, following is the dynamic description thereof, i.e. the respective operation:

The device 1 may be arranged, for example, on the service truck for feeding automatic machines for cutting panels described and claimed in patent application number PS2007A000024 dated 11th July 2007 on behalf of the same applicant directly on any machine for machining panels onto which it is connected;

In such position it may be loaded with panels 4 on the trays 3, by means of a common forklift, whose forks are easily inserted into the sub-levelled median bands 7 of the trays 3, on both sides of the frame 2, in such a manner that the loading may occur on the side least interfering, contingently, with the other operations undergoing around the device 1.

Loading is always carried out on the tray 3 laying in the reference position whereat the interspace with respect to the upper tray 3 is greater, for obvious reasons of easy fitting thereonto, wherein the excursion of the trays 3 to reach said position, i.e. the kinematisms to attain the interspaces differentiated in the stack, are the same as those to be described hereinafter for the step of extracting the panels 4 to move them to machining.

As a matter of fact, assuming that all trays 3 of the device 1 are loaded with panels 4, the operator of the machine intended for the respective operation, of any type, to which the device 1 is connected, may pick - therefrom - the panels 4 required for machining, extracting them from the tray 3 specifically controlled to stop in a manner coplanar with respect to the work plane of the machine;

The tray 3 which stops at such position is supported by the hubs of the respective wheels 10 arranged apically in the respective lateral guides 9, i.e. at the base of the vertical section 17 of the track of the chains 11 and 12, in such a manner that the tray 3 thereabove is in the same condition, with reference to the respective support means 10, but at the top of the vertical section 17 of the track of the chains 11 and 12, in such a manner that two trays 3 arranged therein from time to time are interspaced by a distance equivalent to the development of the vertical section 17 of the track of the chains 11 and 12.

Providing an interspace thus obtained allows the operator grasp the panel 4 laying therein and extract it, rotating it on the roller transverse elements 6 of the tray 3, to remove it on the coplanar work plane of the machine, just as it is easy for the forklift operator to deposit a new panel therein, in the parallel, but independent, tasks of cutting and loading thereof.

When the operator of the machine, and/or forklift operator, need to work on another tray 3 of the stack, the actuation of the gear motor 14, obviously subjected to the control of a computerized logic, controls - in a synchronized circuiting - the two pairs of chains 11 and 12, in such a manner that the overlapped trays 3 are all accordingly driven to be raised or lowered with respect to respective constraints 10 fixed equally spaced from the pairs of chains 11 and 12 themselves.

The track of the pairs of chains 11 and 12 themselves - excluding the intermediate section 17 where, as observed, when the trays 3 pass or stop thereon the interspace comprised therebetween corresponds to the height of the intermediate section 17 itself - however develops along the lower 15 and upper 16 slanted planes, in such a manner that, in such travels, the fixing points 10 of the same tray 3 on the opposite chains 11 and 12 are mutually approached, sliding through the dual wheels 10 in the respective lateral guides 9, suitably shaped to restrain them;

In the abovementioned travels along the lower 15 and upper 16 slanted planes the interspace between the trays 3 is no longer determined by the vertical section of the chains 11 and 12, but by the respective slanted developments 15 and 16, hence implying that the trays 3 - at such positions, i.e. above and beneath a substantially intermediate position in the stack formed thereby - mutually approach and pile up, reducing the interspace therebetween, and allowing respective multiplication, hence increasing the respective support planes, where the operator is not required to pick the panels 4 by hand.

The alternative arrangement of the trays 3 at a median position, with stationing thereof at the level of the work plane of the manufacturing machine, alongside representing reservoirs for panels 4 to be extracted and/or allow alternative extraction in cases where panels 4 are required diversified by characteristics, allows the operator to alternatively reintroduce - on the trays 3 - panels 4 not entirely used for the machining process, for example not entirely cut because too large for the contingent production needs;
thus, the method not only represents a system for feeding the manufacturing machines, but a more complete system for handling panels used in the manufacturing machine, both feeding and receiving, i.e. both for alternatively introducing them into the machine and recovering them when extracted therefrom in the portion possibly overlarge or semi-machined.

In such expansion of functions the method is particularly suitable for small-scale operations, wherein the panel 4, for example when connected to the system for handling cutting machines, is intended to be picked up and placed down several times before completing operations thereof.

### Alternative embodiment

It is obvious that in alternative embodiments, still falling within the solution concept implied in the embodiment illustrated above and claimed below, the method for handling panels for use in manufacturing machines according to the present invention may be obtained by means of equivalent technical and mechanical elements, i.e. provided with further supplementary solutions, thus all shapes of the respective components may vary to suit the purpose.

In such context, strictly for exemplifying and non-limiting purposes, it should be observed that:

The number of stacked overlapped trays may vary, wherein increasing the relative number however implies geometric variations, where possible, and laying criteria on site, it being possible to imagine breaking the floor, considering larger dimensions proportionally to the substantially fixed parameter of coplanarity of the level having a larger interspace with the work plane of the manufacturing machine.

Criteria and devices for the vertical movement of the trays may differ with respect to the four synchronous chains conceived in the preferred embodiment described above; such different driving systems may be conceived both maintaining the concept of the slanted planes for the dynamic differentiation of the interspace between the trays, for example using ropes or alternating motion sliding means even of the non-circuiting type, and providing independent kinematisms, for example by means of a plurality of worm screws with actuation device/s controlled by computerised logics.

The device may be introduced along lines for automatically supplying panels to the manufacturing machines, both at the respective outputs, i.e. close to the machine, and along the respective development, serving as a reservoir and/or container for characteristically different panels on the support trays, for which purpose the device may also be fed on the lower side, being integrated in a line for conveying the panels to the machine.

Specifically referring to applications thus attained, particularly advantageous may be the motorisation of the rollers for holding panels on the trays, in such a manner, to automate movement thereof, being integrated in the line for conveying the panels to the machine.

### Advantages of the invention

As clear from the detailed description of the preferred embodiment above and from the information also provided above regarding some variant embodiments, the method for handling panels for use in manufacturing machines, according to the present invention, offers advantages corresponding to the attainment of the preset objects and others: as a matter of fact, it supplements a functional, modular, polyvalent and inexpensive automatic solution concept suitable to form a reservoir for supplying panels to the manufacturing machines, eliminating the need of requiring having at least one means and operator constantly serving it, with ensuing intuitive advantage of saving due to the possibility of diversely employing means and manpower; furthermore the method according to the present invention covers a more extensive operative scope, attaining an actual innovative system for handling panels for use in the manufacturing machines, suitable for operating both during the feeding step and extraction step and which can also be introduced into entirely automated lined.

### KEY TO THE REFERENCE NUMBERS

1) device for implementing the method
2) parallelepiped-shaped metal frame
3) trays
4) panels
5) coplanar portions of the trays having the roller transverse elements
6) roller transverse elements
7) sub-levelled median bands of the trays for inserting the forks of the forklift
8) vertical bars for sliding constraint of the trays against the corners
9) outwards C-shaped guides provided laterally on the trays
10) dual wheels sliding inside le lateral guides of the trays and respective pins
11) chain
12) chain
13) pinions of the chains
14) gear motor for driving chains
15) lower slanted planes of the circuit of the chains
16) upper slanted planes of the circuit of the chains
17) intermediate vertical track at the slanted planes of the circuit of the chains
18) oblique transverse elements for holding the chains in the slanted track section.

## Claims

1. Method for handling panels for use in manufacturing machinery, especially cutting machines, **characterised in that** it comprises overlapping and stacking a plurality of trays for holding panels and respective vertical movement at a differentiated mutual interspace, in such a manner that the tray lying at the level of the working plane of the served machine has an interspace, with respect to the tray overlying thereto, greater than the interspace comprised between the other trays of the stack, upper and/or lower with respect to said level, that remain mutually overlaid, to reduce the vertical dimension of the stack and maximise the number of stackable trays, simultaneously having enough working space at the work plane.

2. Device for implementing the method according to claim one, **characterised in that** it comprises overlapped stacks of trays (3), respectively supported on opposite sides at two points (10) per side (9), said support points (10) being symmetrically and simultaneously positionable, along each of the sides themselves, through equally spaced fixing of the support means (10) to two pairs of movable means (11, 12) on tracks defining opposite inward bendings symmetrically outlining distal slanting planes (15, 16) and an intermediate vertical track segment (17).

3. Device for implementing the method according to claim one, **characterised in that** it comprises overlapped stacks of trays (3), respectively supported on opposite sides at two points (10) per side (9), said support points (10) being symmetrically and simultaneously positionable, along each of the sides themselves, through equally spaced fixing of the support means (10) to two pairs of means (11, 12) symmetrically synchronically circuiting on two opposite sides of the stack, on each of whose sides the respective pair of circuiting means (11, 12) is counterfaced in a coplanar manner on the inward development side of the respective circuits, whose inward development sections symmetrically outline distal slanting planes (15, 16) and an intermediate vertical track segment (17), fixed equally spaced along such inward development sections being said sliding support means (10) of said trays (3).

4. Device for implementing the method according to claim one, **characterised in that** it comprises overlapped stacks of trays (3), respectively supported on opposite sides at two points (10) per side (9), said support points (10) being symmetrically and simultaneously positionable, along each of the sides themselves, through equally spaced fixing of the support means (10) to two pairs of chains (11, 12) symmetrically synchronically circuiting on two opposite sides of the stack, on each of whose sides the respective pair of chains (11, 12) is counterfaced in a coplanar manner on the inward development side of the respective circuits, whose inward development sections symmetrically outline distal slanting planes (15, 16) and an intermediate vertical track segment (17), fixed equally spaced along such inward development sections being said sliding support means (10) of said trays (3).

5. Device according to claim four, **characterised in that** each tray (3) is made up of three coplanar portions (5) accompanied by a plurality of parallel roller transverse elements (6) separated by two parallel sub-levelled median bands (7) and transversely void, dimensioned and positioned to be suitable to receive le the forks of a forklift.

6. Device according to claim four, **characterised in that** each tray (3) bears - on the extension of the greater sides - lateral guides (9) made up of C-shaped profiles with an outwards opening sliding inside which are the dual wheels (10) whose hub is respectively fixed equally spaced to one of two pairs of chains (11, 12) symmetrically synchronically circuiting on two opposite sides of the stack of trays (3).

7. Device according to claim six, **characterised in that** on each of the two opposite sides of the stack of trays (3) the respective pair of chains (11, 12) is counterfaced in a coplanar manner on the inwards development side of the respective circuits symmetrically outlining lower (15) and upper (16) slanted planes as well as intermediate vertical track segments (17) and fixed equally spaced along such inwards development sections of the circuits of the chains 15 and 16 are said dual wheels 10, sliding inside said lateral guides 9 of said trays 3.

8. Device according to claim six and seven, **characterised in that** along the slanted track section (15, 16) said chains (11, 12) have transverse elements (18) assembled in an oblique manner to counter the forces that bend the straightness of the chains.

9. Device according to claim five and six, **characterised in that** each tray (3) bears - on the extension of the longer sides - lateral guides (9) made up of C-sectioned profiles with an outwards opening welded beneath the level of said roller transverse elements (6) in such a manner that the panel (4) supported by a lower tray (3) can be positioned between the lateral guides (9) of the upper tray (3) when the trays (3) arrive to be mutually overlaid.

10. Device according to claim four, **characterised in that** each tray (3) slides constrained at the respective four corners with vertical bars (8).
